# EUROPEAN PATENT SPECIFICATION

(11) **EP 2 833 223 B1**
(45) Date of publication and mention of the grant of the patent: **05.04.2017**
(21) Application number: 13768586.3
(22) Date of filing: 20.02.2013
(51) Int. Cl.: G05B 19/042, B23Q 15/00, G05B 19/4069

(54) **SIMULATION DEVICE, SIMULATION METHOD AND SIMULATION PROGRAM**
SIMULATIONSVORRICHTUNG, SIMULATIONSVERFAHREN UND SIMULATIONSPROGRAMM
DISPOSITIF DE SIMULATION, PROCÉDÉ DE SIMULATION ET PROGRAMME DE SIMULATION

(30) Priority: 28.03.2012 JP 2012073510
(43) Date of publication of application: 04.02.2015
(73) Proprietor: Omron Corporation, Kyoto-shi, Kyoto 600-8530 (JP)
(72) Inventor: SHIMAKAWA, Haruna, Kyoto-shi Kyoto 600-8530 (JP); SAKAGUCHI, Yasunori, Kyoto-shi Kyoto 600-8530 (JP); NARUTANI, Fumiaki, Kyoto-shi Kyoto 600-8530 (JP); OYA, Taku, Kyoto-shi Kyoto 600-8530 (JP)
(74) Representative: Horn Kleimann Waitzhofer Patentanwälte PartG mbB
(86) International application number: PCT/JP2013/054161
(87) International publication number: WO 2013/145952

(56) References cited:
- WO-A1-00/36477
- WO-A1-00/36477
- JP-A- 2003 162 304
- US-A1- 2005 090 929
- US-A1- 2008 091 394

## Description

### FIELD

The present invention relates generally to a simulation device, simulation method, and simulation program, and more specifically relates to a simulation device, simulation method, and simulation program suited for simulating a control program run on a controller that controls the operations of a machine handling a control target.

### BACKGROUND

Conventionally there are devices that simulate control in accordance with a control program; for example, refer to Japanese Unexamined Patent Application Publication No. 2003-118981 (hereafter, Patent Document 1), No. 2007-90479 (hereafter, Patent Document 2), and No. 2010-108292 (hereafter, Patent Document 3).

### References

### Patent Documents

Patent Document 1: Japanese Unexamined Patent Application Publication No. 2003-118981
Patent Document 2: Japanese Unexamined Patent Application Publication No. 2007-90479
Patent Document 3: Japanese Unexamined Patent Application Publication No. 2010-108292

Furthermore, US 2005/0090929 A1, US 2008/0091394 A1 and WO 00/36477 A1 are mentioned as prior art.

### SUMMARY

### Technical Problem

However, the conventional technology is not capable of simulating control responsive to a detection result from a sensor, because the sensor, which detects a prescribed state of the machine, was not simulated.

To address the above described problems, the invention provides a simulation device, a simulation method, and a simulation program capable of implementing control simulation responsive to a detection result from a sensor.

### Solution to Problem

To achieve the above described aim the invention provides a simulation device, simulation method, and simulation program capable of implementing control simulation responsive to a detection result from a sensor according to claims 1-6.

### BRIEF DESCRIPTION OF THE DRAWINGS

FIG. 1 is an explanatory diagram of a configuration of a control system according to an embodiment of the invention.
FIG. 2 is an explanatory diagram of a hardware configuration of a PC according to an embodiment of the invention.
FIG. 3 is an explanatory diagram of function blocks implemented through a CPU running a simulation program.
FIG. 4 is a flowchart illustrating the flow of control of a simulation in the first embodiment.
FIG. 5 illustrates a state of simulating control of a machine in the first embodiment.
FIG. 6 illustrates an example of controlling a machine in the first embodiment.
FIG. 7 illustrates a modification example of a sensor in the first embodiment.
FIG. 8 illustrates a modification example of the machine in the first embodiment.
FIG. 9 illustrates an example of a machine in a second embodiment.
FIG. 10A is a first illustration of the initial position of the machine in the second embodiment.
FIG. 10B is a second illustration of the initial position of the machine in the second embodiment.
FIG. 10C is a third illustration of the initial position of the machine in the second embodiment.
FIG. 11 illustrates an example of a machine in a third embodiment.
FIG. 12 illustrates an example of a machine in a fourth embodiment.

### DETAILED DESCRIPTION

Embodiments of the present invention will be described in detail with reference to the drawings. The same or corresponding elements within the drawings will be given the same reference numerals and the explanations therefor will not be repeated.

### [First Embodiment]

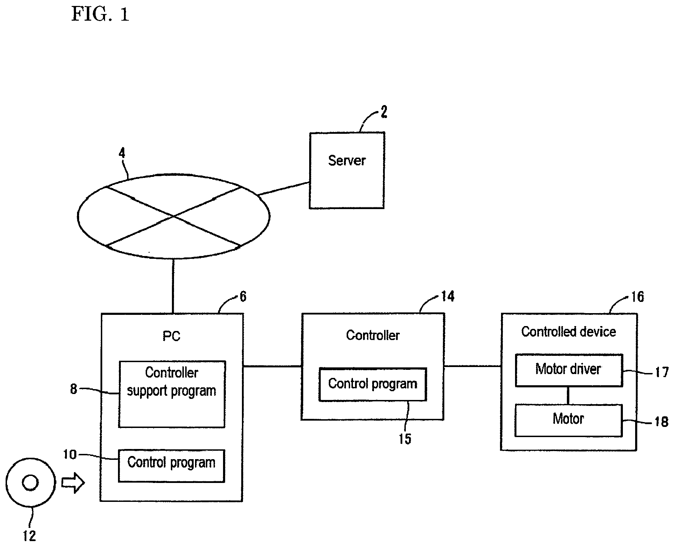

FIG. 1 is an explanatory diagram of a configuration of a control system according to an embodiment of the invention. Referring to FIG. 1, a control system according to an embodiment of the present invention is constituted by a server 2, a network 4, a personal computer (PC) 6, a controller 14, and a controlled device 16.

The server 2 is connected to the PC 6 via the network 4. The PC 6 is connected to the controller 14, enabling the PC 6 to communicate with the controller 14 controlling the controlled device 16.

The PC6 corresponds to the simulation device in the first embodiment of the present invention. A simulation program that includes a controller support program 8 and a control program 10 created by the user are stored in the PC 6. A Compact Disc-Read Only Memory (CD-ROM) 12 stores the controller support program 8. The controller support program 8 installed on the PC 6 may be installed from the CD-ROM 12.

The controller 14 controls the operations of the controlled device 16. In this embodiment of the present invention, a Programmable Logic Controller (PLC) is employed as one example of the controller 14. That is, the PLC is provided with what is known as a motion control function. The controller 14 stores a control program 15 which defines the control details for a controlled device 16. The controller 14 executes a single loop of the control program 15 for each control cycle. The control program 15 stored in the controller 14 is a copy of the control program 10 stored in and sent from the PC 6.

The controlled device 16 includes a motor 18 such as a servo motor, or stepping motor, and a motor driver 17 for driving the motor.

The motor driver 17 supplies the motor 18 with drive current. The motor drivers 17 is supplied with a position command value from the controller 14 running the control program 15 for each control cycle, and supplies the motor 18 with drive current in accordance with the position command value. If the motor 18 is a servo motor, the motor 18 is provided with an encoder, and the encoder detects the actual rotation position of the motor 18. The motor drive 17 uses the actual rotation position of the motor for feedback control.

The foregoing describes a case where a controller support program is installed on the PC 6 via a CD-ROM 12; however the present embodiment is not limited to this case, and for example the controller support program may be downloaded to the PC 6 from the server 2 via the network 4. The control program may be treated in the same manner.

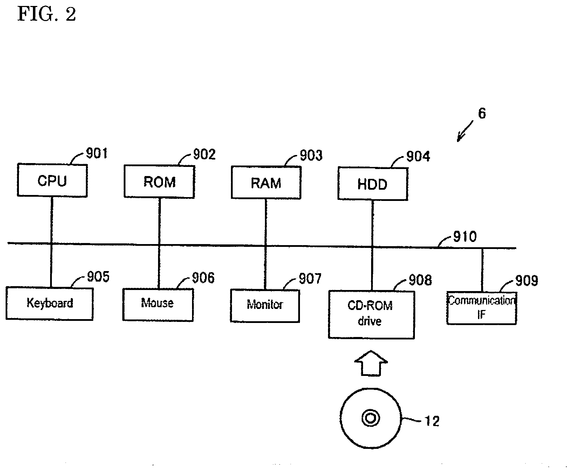

FIG. 2 is an explanatory diagram of a hardware configuration of the PC 6 according to an embodiment of the invention. Referring to FIG. 2, the PC 6 according to an embodiment of the present invention includes a CPU 901, a ROM 902, a RAM 903, and an HDD 904, a CD-ROM drive 908 for reading data, a communication interface 909, a monitor 907, a keyboard 905, and a mouse 906. Each of these components is mutually connected via an internal bus 910.

The HDD 904 is typically a non-volatile magnetic memory, and stores the controller support program read from the CD-ROM 12 via the CD-ROM drive 908. The control program 15 is also stored on the HDD 904.

The CPU 901 extracts a controller support program 8 according to the present embodiment that is stored in the HDD 904 to the RAM 903 and the like, and runs the program.

The RAM 903 is a volatile memory used as the work memory The ROM 902 generally stores programs such as an operating system (OS), and the like.

The communication interface 909 typically supports generic communication protocols such as those for the Ethernet (TM) and a Universal Serial Bus (USB), enables data communication with the server 2 via the network 4, and enables data communication with the controller 14.

The monitor 907 may be constituted by a liquid crystal display device, a cathode ray tube (CRT), a plasma display device, and the like, and displays the processing results from the PC 6. The keyboard 905 receives input keyed in by the user, and the mouse 906 receives pointing operations from the user.

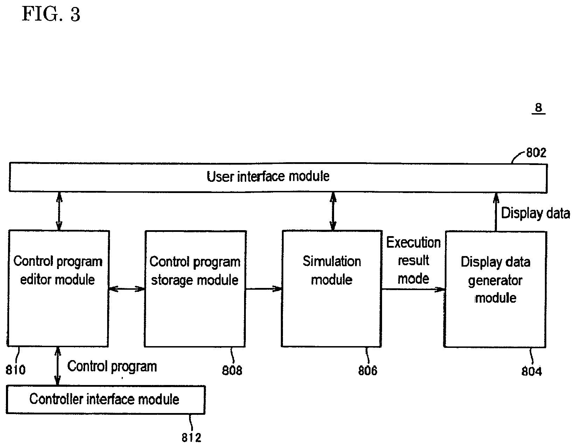

FIG. 3 is an explanatory diagram of function blocks implemented through the CPU 901 running a controller support program 8. FIG. 3 shows a user interface module 802, a display data generator module 804, a simulation module 806, a control program storage module 808, a control program editor module 810, and a controller interface module 812.

The user interface module 802 creates the contents of a window displayed on the monitor 907 connected to the PC 6, and receives instructions from the user via the keyboard 905 and the mouse 906.

The control program editor module 810 allows the user to input and edit the control program. The control program editor module 810 may also compile the control program if the control program needs to be compiled before being run. The generated control program is sent to the controller 14 via the controller interface module 812. Additionally the generated control program is stored in the control program storage module 808 which is a prescribed region of the HDD 904. The control program editor module 810 can also read and edit the control program 15 stored on the controller 14 via the controller interface module 812.

The simulation module 806 serves as a simulator for the controller 14. The simulation module 806 simulates the operations of the controller 14 running the control program 15 in accordance with the control program 10 stored in the control program storage module 808, and calculates the command values for positions that should be output by the controller 14 for each control cycle.

The simulation module 806 may also simulate the conditions resulting from the arrival of external signals that affect the operation of the control program, or simulate the conditions resulting from changes in the internal state of the controller 14 such as the contents of the memory for the controller 14 due to running of the control program 15 itself and those changes affecting the operation of the control program 15.

The simulation module 806 may also receive instructions from the user via the user interface module 802 for running the simulation. In other words, the user interface module 802 may also function to receive user instructions meant for the simulation module 806.

The display data generator module 804 generates display data that represent chronological changes in the results data created by the simulation module 806. The display data generator module 804 sends the generated display data to the user interface module 802 so that the display data may be presented on the monitor 907 connected to the PC 6 in a graphical, a textual, or a three-dimensional display form.

In this embodiment, a virtual machine (for example a virtual pneumatic cylinder) corresponding to a machine (a pneumatic cylinder) in a real space is arranged in a three-dimensional (3D) space which is a simulated space corresponding to real space.

The simulation module 806 illustrated in FIG. 3 runs a 3D simulator, and a machine control simulator.

The 3D simulator presents an object (in this embodiment the virtual machine) in a three-dimensional space on the basis of results acquired from trace data. In the present embodiment the 3D simulator determines whether or not a state (for example, a condition where a piston is at a prescribed piston position) that a virtual sensor (for example, a position sensor for detecting a piston position in a pneumatic cylinder) provided in the virtual machine is to detect has occurred. The virtual sensor corresponds to a sensor in a machine in a real space.

The machine control simulator controls the virtual machine in a three dimensional space. More specifically, the machine control simulator computes a command value for controlling the virtual machine, and computes the behavior of the virtual machine corresponding to that command value. In the present embodiment, the machine control simulator computes a command value in accordance with the detection that occurred.

The 3D simulator and the machine control simulator are synchronized by cooperating with each other: (1) the machine control simulator transmitting the computed states of the machine and the work to the 3D simulator; (2) the 3D simulator displaying the received machine and work states in a three-dimensional space; (3) the 3D simulator determining whether or not the state that the sensor is to detect has occurred, and the transmitting information showing that the state that the sensor is to detect has occurred to the machine control simulator when the state has occurred; and (4) the machine control simulator controlling the virtual machine on the basis of the received information.

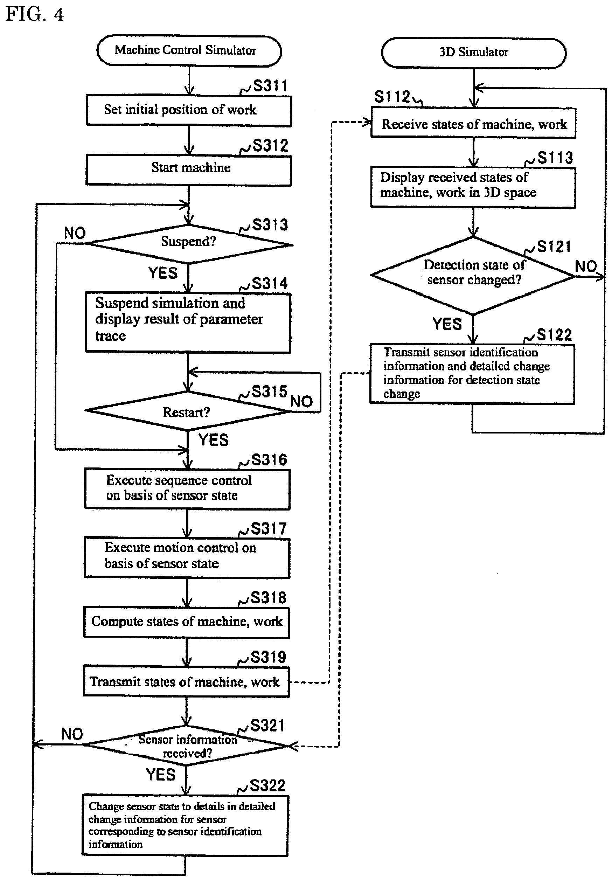

FIG. 4 is a flowchart illustrating the flow of control of a simulation in the first embodiment. Referring to FIG. 4, in step S311 the simulation module 806 runs the machine control simulator to set the initial position of the work.

Next, in step S312, the simulation module 806 runs the machine control simulator which runs the control program 15 to thereby start control of the virtual machine.

In step S313, it is determined whether or not a command to suspend the simulation was received from the user interface module 802. If the command was not received (NO, in step S313), the simulation module 806 proceeds to processing in step S316.

However, if it is determined that the command to suspend the simulation was received (YES, in step S313), in step S314, the simulation module 806 suspends the simulation and transfers information for display on the monitor 907 of the PC 6 to the user interface module 802; for example, the simulation module 806 may transfer trace results and the like, such as parameter values that express the state of the machine.

The simulation module 806 determines whether or not a command to restart the simulation was received from the user interface module 802. If the command was not received (NO, in step S315), the simulation module 806 repeats the processing in step S315.

However, when it is determined that the command to restart the simulation was received (YES, in step S315), the simulation module 806 executes sequence control on the basis of the state of the sensor that changed in step S322 (later described) in step S316. In step S317, the simulation control module 806 executes motion control on the basis of the state of the sensor.

In step S318, the simulation module 806 computes the states of the machine and the work as a result of the motion control, and in step S319 transmits the computed states of the machine and of the work to the 3D simulator.

Subsequently, in step S112 the simulation module 806 runs the 3D simulator and receives the state of the machine and the work transmitted from the machine control simulator; in step S113 the simulation module 806 transfers the necessary execution result data to the display data generator module 804 so that the state of the machine and the work received can be displayed in the three-dimensional space on the monitor 907.

Next, the simulation module 806 determines whether or not the detection state of the sensor changed. For example, in the case of a pneumatic cylinder and a sensor that detects the position of a piston, the simulation module 806 determines that the detection state of the sensor changed when the piston position is at the detection position of the sensor causing the detection state of the sensor to change to the ON state. The simulation module also determines that the detection state of the sensor changed when the piston position is no longer at the detection position of the sensor causing the detection state of the sensor to change to the OFF state.

The 3D simulator can thus specify the position of a part of the machine in this manner and can therefore determine whether or not the detection state of the sensor changes.

On determining that the detection state of the sensor changed (if YES, in step S121), in step S122 the simulation module 806 transmits identification information for the sensor with the changed detection state, and detailed change information representing how the detection state of the sensor changed to the machine control simulator.

After step S122 and if the detection state of the sensor did not change (if NO, in step S121) the simulation module 806 returns to the processing in step S112.

The simulation module 806 runs the machine control simulator to determine whether or not sensor information, which includes sensor identification information and the detailed change information, was sent from the 3D simulator in step S321.

If the simulation module 806 determines that the sensor information was received (if YES, in step S321), the simulation module 806 changes the sensor state of the sensor represented by the sensor identification information included in the sensor information to the contents of the detailed change information included in the sensor information.

After step S322 and if no sensor information was received (if NO, at step S321) the simulation module 806 returns to the processing in step S313.

If the virtual machine represents a single-acting pneumatic cylinder 610, settings that define the virtual machine include a Boolean variable a representing whether or not air pressure is applied to the air supply port, a constant b representing the stroke of the single-acting pneumatic cylinder 610, and a constant c representing the type of single-acting pneumatic cylinder (push type or pull type). A Boolean variable takes two kinds of values: "T" (true) or "F" (false).

The constants b and c may be set when the single-acting pneumatic cylinder 610, which is a virtual machine, is selected. The variable a changes with the execution of the simulation.

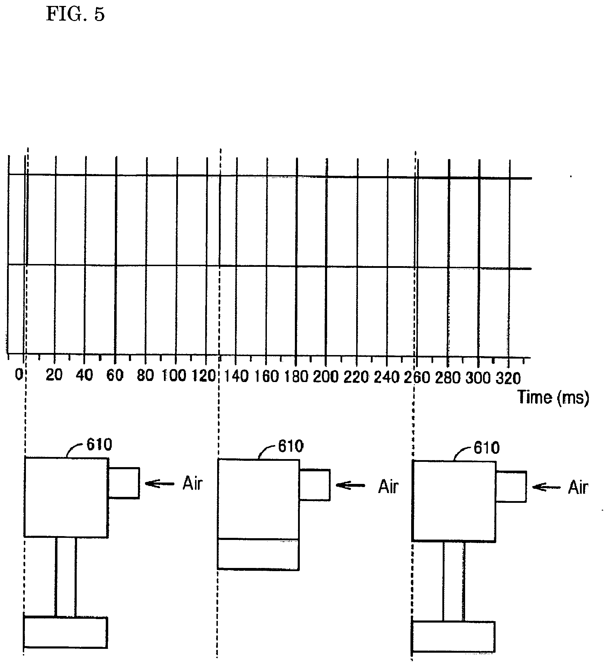

FIG. 5 illustrates a state of simulating control of a machine in the first embodiment. Referring to FIG. 5, assume the constant c, which represents the type of single-acting pneumatic cylinder 610, is given a value representing a push type cylinder. When a control is run that applies an air pressure to the air supply port of the single-acting pneumatic cylinder 610 at a time of 2 ms, given that the single-acting pneumatic cylinder 610 is a push type cylinder, the variable a equals "T" and the single-acting pneumatic cylinder 610 is in a state where the piston is completely extended to a full stroke represented by the constant b.

When a control is run to release the air pressure at the air supply port of the single-acting pneumatic cylinder 610 at a time of 128 ms, the variable a equals "F", and the single-acting pneumatic cylinder 610 is in a state where the piston retracts completely. When a control is run to once again apply an air pressure to the air supply port of the single-acting pneumatic cylinder 610 at a time of 258 ms, the variable a equals "T" and the single-acting pneumatic cylinder 610 is in a state where the piston extends completely.

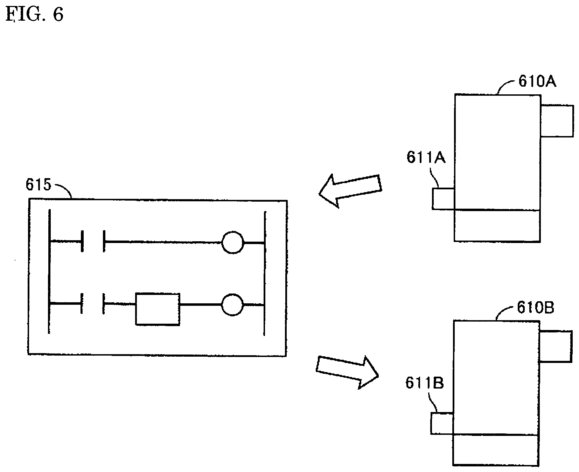

FIG. 6 illustrates an example of controlling a machine in the first embodiment. Referring to FIG. 6, single acting pneumatic cylinders 610 A, 610 B are provided with sensors 611A, 611B respectively; the sensors 611A, 611B detect when the pistons in the single acting pneumatic cylinders 610A, 610B are completely extended.

For example, consider the case of controlling the extension of a piston in the single acting pneumatic cylinder 610B according to the control program 615 under the condition that the piston in the single acting cylinder 610A is completely extended.

It was not possible to simulate the detection by the sensors 611A, 611B in a conventional simulation. In the present embodiment, as illustrated in step S121 and step S122 in FIG. 4, when the detection state of the sensors 611A, 611B changes (in this case, a change in the detection state means that the sensor 611A detects that the piston monitored by the sensor 611A is completely extended), the 3D simulator transmits the identification information of the sensor (for example, a number assigned to the sensor in advance to designate the sensor 611A), and detailed change information (for example, the variable a for the single acting pneumatic cylinder 610A changing from "F" to "T") to the machine control simulator.

The machine control simulator carries out sequence control and motion control on the basis of the sensor state received from the 3D simulator; for example, the machine control simulator carries out control to extend the piston in the single acting pneumatic cylinder 610B on the basis of the detection result from the sensor 611A indicating that the piston in the single acting pneumatic cylinder 610A is completely extended.

Thus, it is possible to carry out the simulation of control on the basis of detection results from the sensor 611A because the 3D simulator can simulate detection by the sensor 611A in this manner.

Referring to FIG. 6, the sensors 611A, 611B in the single acting pneumatic cylinders 610A, 610B detect when the respective pistons in the single acting pneumatic cylinders 610A, 610B are completely extended.

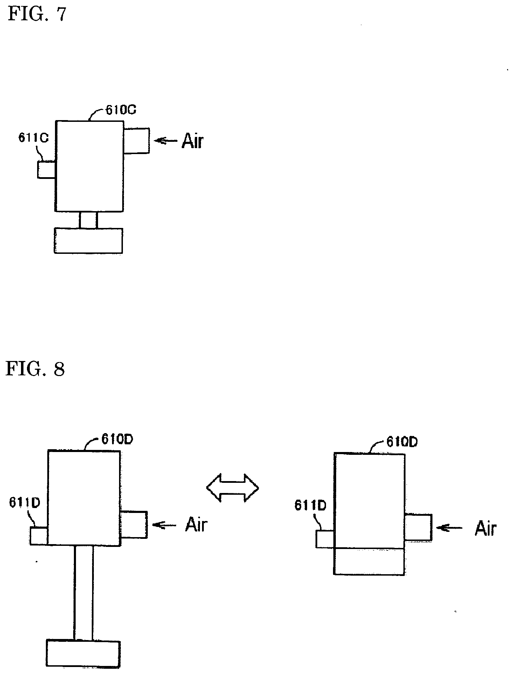

FIG. 7 illustrates a modification example of a sensor in the first embodiment. Referring to FIG. 7, without being limited to the explanation of FIG. 6, a sensor 611C may be provided for the single acting pneumatic cylinder 610C to detect a state where the piston is in a position between complete extension and complete retraction. Additionally, the complete retraction of the piston may also be detected.

FIG. 8 illustrates a modification example of the machine in the first embodiment. Referring to FIG. 8, without being limited to the push type single-acting pneumatic cylinder illustrated in FIG. 5 and FIG. 6, a single-acting pneumatic cylinder 610 D may be a pull type cylinder. When providing a pull type single-acting pneumatic cylinder, the constant c which represents the type of cylinder (push type, or pull type) may be set to a value indicating the pull type cylinder.

### [Second Embodiment]

The simulation of a single-acting pneumatic cylinder is described as one example in the first embodiment. The simulation of a double-acting pneumatic cylinder is described as one example in the second embodiment.

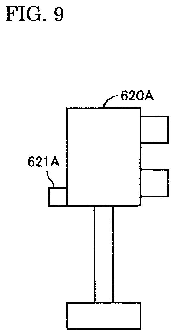

FIG. 9 illustrates an example of a machine in a second embodiment. Referring to FIG. 9, when the virtual machine represents a double-acting pneumatic cylinder 620A, the settings that define the virtual machine may include a Boolean variable d indicating whether or not the air pressure is applied to the air supply port opposite the piston, a Boolean variable e indicating whether or not the air pressure is applied to the supply port near the piston, a constant f representing the stroke of the double-acting pneumatic cylinder 620A, and a constant g representing the initial position of the double-acting pneumatic cylinder 620A.

The constants f and g may be set when the double-acting pneumatic cylinder 620A, which is a virtual machine, is selected. The variables d and e change with the execution of the simulation. A sensor 621A detects the complete extension of the piston.

When a control is run to apply an air pressure to the air supply port opposite the piston in the double-acting pneumatic cylinder 620A and to release the air pressure from the air supply port near the piston, the variable d and the variable e equal "T" and "F" respectively, and the double-acting pneumatic cylinder 620A is in a state where the piston is completely extended to the full stroke represented by the constant f.

When a control is run to apply an air pressure to the air supply port near the piston in the double-acting pneumatic cylinder 620A and to release the air pressure from the air supply port opposite the piston, the variable d and the variable e equal "F" and "T" respectively, and the double-acting pneumatic cylinder 620A is in a state where the piston is completely retracted.

The double-acting pneumatic cylinder 620A of the second embodiment is also capable of simulating detection using the sensor 621A in the same manner as the single-acting pneumatic sensor 610 of the first embodiment and therefore it is possible to simulate control on the basis of detection results from the sensor 621A.

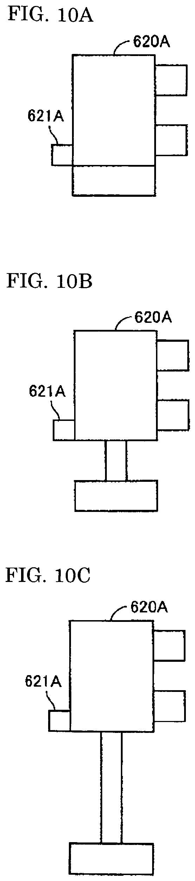

FIG. 10A through FIG. 10C are first through third illustrations of the initial position of the machine in the second embodiment. Referring to FIG. 10A through FIG. 10C, in the second embodiment, the constant g representing the initial position of the double-acting pneumatic cylinder 620A is provided; therefore, it is possible to set various initial positions for the cylinders such as a state where the piston is completely pulled in as illustrated in FIG. 10A, a state where the piston is pulled out partway as illustrated in FIG. 10B, and a state where the piston is completely pushed out as illustrated in FIG. 10C.

### [Third Embodiment]

The first and second embodiments provide examples where the machine simulated is a pneumatic cylinder. The third embodiment describes an example where the machine simulated is a ball screw.

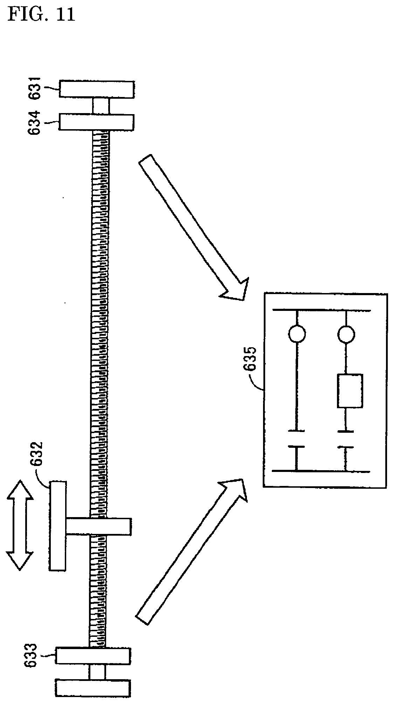

FIG. 11 illustrates an example of a machine in the third embodiment. Referring to FIG. 11, when the virtual machine is a ball screw 631, the simulation module 806 rotates the screw shaft of the ball screw control in accordance with the control program 635 to operate a moving body left and right.

When the moving body 632 arrives at the positions of end point sensors 633, 634, the end point sensors 663, 634 detect that the moving body 632 has arrived at the endpoints.

The simulation module 806 executes step S121 in FIG. 5 and determines that the detection state of the end point sensors 633, 634 has changed when the moving body 632 arrives at an end point position causing the detection state of the end point sensors 633, 634 to change to an ON state. Additionally, the simulation module 806 determines that the detection state of the end point sensors 633, 634 has changed when the moving body 632 is no longer at the end point causing the detection state of the end point sensors 633, 634 to change to an OFF state.

Thus it is possible to carry out the simulation of control in accordance with the control program 635 on the basis of detection results from the end point sensors 633, 634 because the 3D simulator can simulate detection by the end point sensors 633, 634. For instance, it is possible to simulate a control that outputs an alarm, or runs a command making the moving body return to the original position and the like when the end point sensors 633, 634 change to the ON state.

### [Fourth Embodiment]

The first and second embodiments provide examples where the machine simulated is a pneumatic cylinder. The fourth embodiment describes an example where the machine simulated is a robot arm.

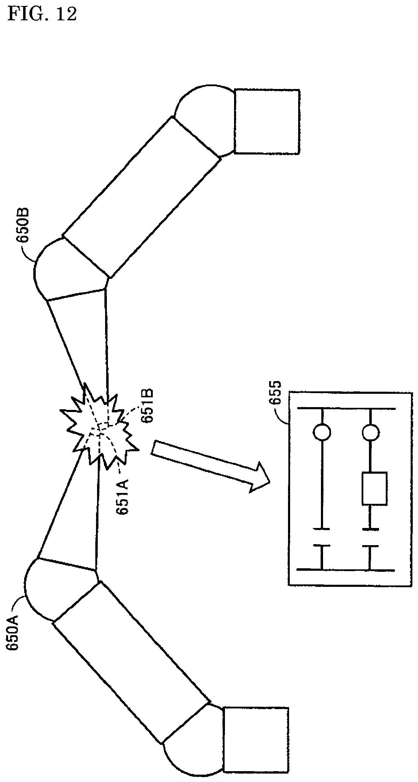

FIG. 12 illustrates an example of a machine in the fourth embodiment. Referring to FIG. 12, when the virtual machine represents robot arms 650A, 650B, the simulation module 806 controls the robot arms 650A, 650B in accordance with the control program 655 to move the robot arms 650A, 650B.

If the robot arms 650A, 650B collide with each other, collision detection sensors 651A, 651B are capable of detecting the collision.

The simulation module 806 executes step S121 in FIG. 5 to determine that the detection state of the collision detection sensors 651A, 651B has changed when the collision detection sensors 651A, 651B detect that the robot arms 650A, 650B are in a mutual positional relationship where the robot arms would collide causing the detection state of the collision detection sensors 651A, 651B to change to an ON state. Additionally, the simulation module 806 determines that the detection state of the collision detection sensors 651A, 651B has changed when the collision detection sensors detect that the robot arms 650A, 650B are no longer in a mutual positional relationship where the robot arms would collide causing the collision detection sensors 651A, 651B to change to an OFF state.

Thus it is possible to carry out the simulation of control in accordance with the control program 655 on the basis of the detection results from the collision detection sensors 651A, 651B because the 3D simulator can simulate the detection by the collision detection sensors 651A, 651B. For instance, it is possible to simulate a control that turns on an urgent halt signal and stops the robot arms 650A, 650B when detection by the collision detection sensors 651A, 651B has changed to the ON state.

### Conclusions

(1) As above described, the simulation device (for instance a PC 6) according to the above described embodiments includes a control module (for instance, the CPU 901) that runs a control program (for example, the control programs 10, 15, 615, 635, 655) executed on a controller (for instance, the controller 14) to control the operation of a machine (for instance, a machine in a real space corresponding to a single-acting pneumatic cylinder 610, 610A-610D, a double-acting pneumatic cylinder 620A, a ball screw 631, robot arms 650A, 650B in a three-dimensional space).
   The control module includes a first computing module, a second computing module, and a detection module. The first computing module (for instance, the subprogram created in the CPU by executing steps S316 and S317 in FIG. 4) computes a command value for operating a virtual machine (a single-acting pneumatic cylinder 610, 610A-610D, a double-acting pneumatic cylinder 620A, a ball screw 631, robot arms 650A, 650B) corresponding to a machine in a virtual space (for instance a three-dimensional space) in accordance with a control program.
   The second computing module (for instance, the subprogram created in the CPU by executing step S318 in FIG. 4) computes the behavior of the virtual machine in accordance with the command value computed by the first computing module.
   The detection module (for instance, the subprogram created in the CPU 901 by executing steps S319, S112, S113, and S121 in FIG. 4) using the behavior of the virtual machine computed by the second computing module, determines whether or not the state of the virtual machine satisfies a simulated detection condition corresponding to a detection condition for a sensor in the machine.
   The first computing module computes a command value in accordance with the simulated detection condition determined as satisfied by the detection module (for example, the subprogram created in the CPU 901 by executing steps S122, S321, S322, S316, and S317 in FIG. 4).
   In this manner, a command value is computed for operating a virtual machine, which corresponds to a machine, in a virtual space in accordance with a control program; the behavior of the virtual machine in accordance with the computed command value is also computed; and whether or not the state of the virtual machine is a state that satisfies a simulated detection condition corresponding to a detection condition for a sensor in the machine on the basis of the computed behavior of the virtual machine is computed; and if the condition is satisfied, a command value is computed in accordance with the simulated detection condition determined to be satisfied.
   Accordingly the virtual machine in the virtual space corresponding to a real machine in a real space may be controlled in accordance with the detection results from a sensor in the virtual space corresponding to a sensor in the real space. Therefore, it is possible to implement a simulation of control in accordance with the detection results of a sensor.
(2)The first computing module, the second computing module, and the detection module determine a command value, the behavior of a virtual machine, and whether or not a simulated detection condition are satisfied respectively within the same time interval; for example, the machine control simulator, and the 3D simulator in FIG. 4 communicate data with each other respectively while executing the respective processing loops and therefore synchronize the timing of communication and operate during the same time interval. Thereby it is possible to implement an overall simulation that is synchronized.
(3)The control module may further be provided with an operation reception module (for example, the subprogram created in the CPU 901 by executing step 313 in FIG. 4) that accepts an operation to suspend the simulation; and an operation suspension module (for example, the subprogram created in the CPU 901 by executing step 314 in FIG. 4) that suspends simulation when the operation reception module receives the operation to suspend the simulation. Therefore it is possible to suspend a simulation, even when controlling a simulation in accordance with the detection results of a sensor.
(4) Moreover, the control module (for example, the subprogram created in the CPU 901 by executing step S314 in FIG. 4) may further be provided with a display control module that displays information representing the state of the virtual machine when the operation reception module receives an operation to suspend the simulation. Accordingly, verifying the information representing the state of the virtual machine may be used to debug the control program when the simulation is suspended.

### Modification Examples

(1) In the previously described embodiments, the state of a section of the machine (for instance, the single-acting pneumatic cylinder 610) is assumed to change from a first state to a second state (for instance, the piston changing from a completely retracted state to a completely extended state) instantaneously at time 0 ms as illustrated in FIG. 5. However, without being limited to this scenario, the simulation maybe carried out with the time needed for that section of the machine to change (for example, the time needed for the piston to extend and contract) in mind.
   Additionally, the amount of time needed for the section of the machine to change may be set as a constant, or, may be set to be variable in accordance with a load and the like.
(2)The simulator executed by the simulation module 806 in the previously described embodiments is divided into two units, a 3D simulator and a machine control simulator.
   However, without being limited in this manner, the two simulator units may be combined. If the two simulators are combined, there is no longer a need for transferring data back and forth, and therefore a more efficient simulation may be executed.
(3)The sensor illustrated in the previously described embodiments for detection the position of a section of the machine may detect the position by detecting the mechanical contact, or may detect the position using ultrasound, infrared, and light, or the like.
(4)The previously described embodiments illustrate a simulation device. However, without being limited to a simulation device, the invention may be provided as a simulation method carried out in a simulation device, or a simulation program executed in a simulation device.
(5) In the previously described embodiments the virtual sensor corresponds to a sensor in a machine in a real space. For example, as illustrated in the first embodiment, the virtual sensor represents the sensors 611A-611C in the real single-acting pneumatic cylinder 610A-610C. Additionally, as illustrated in the second embodiment, the virtual sensor represents the sensor 621A in the real double-acting pneumatic cylinder 620A. As illustrated in the third embodiment the virtual sensor represents the sensors 633, 634 in the real ball screw 631. Finally, as illustrated in the fourth embodiment, the virtual sensor represents the collision detection sensors 651A, 651B in the robot arms 650A, 650B.
   However, without being limited to these representations, the virtual sensor may exist only in a three-dimensional space, which is a virtual space not corresponding to a sensor in a machine in a real space. For instance, the virtual sensor may represent a sensor capable of detecting contact to the entire outer surface of the robot arm. The 3D simulator represents the machine in the three-dimensional space and therefore it is possible to compute the relative positions of the machines. Thus contact of the machines may be detected by determining whether there is a point at which the relative distance between the machines becomes zero.
   Presently it is not possible to implement a real sensor that corresponds to this kind of a virtual sensor. However, if a virtual sensor is provided in the simulation of the control program for detecting the contact of the machines, it is possible to verify whether or not contact will occur between the machines due to control in accordance with the control program.
(6)In the previously described fourth embodiment, as illustrated in FIG. 12 the collision detection sensors 651A, 651B in the robot arms 650A, 650B are respectively placed at the tip ends of the arms, making it possible to detect contact at the tip end of the robot arms.

However, as long as the collision detection sensor is capable of detecting contact to a prescribed portion of the robot arm, an embodiment need not be limited to having the sensor on the tip end; a collision detection sensor capable of detecting contact to the entire lower arm portion, a collision detection sensor capable of detecting contact to the entire upper arm portion, or a collision detection sensor capable of detection contact to the entire upper and lower are portion are also acceptable.

All aspects of the embodiments disclosed should be considered merely examples and not limitations as such. The scope of the present invention is not limited to the above description but to the scope of the claims, and is intended to include all equivalents and modifications allowable by the scope of the claims.

### Reference Numerals

- 2: Server
- 4: Network
- 8: Controller support program
- 10, 15: Control program
- 12: CD-ROM
- 14: Controller
- 16: Controlled device
- 17: Motor driver
- 18: Motor
- 610, 610A-610D: Single-acting pneumatic cylinder
- 611A-611C, 621A: Sensor
- 620A: Double-acting pneumatic cylinder
- 631: Ball screw
- 632: Moving body
- 633, 634: End point sensor
- 650A, 650B: Robot arm
- 651A, 651B: Collision detection sensor
- 802: User interface module
- 804: Display data generator module
- 806: Simulation module
- 808: Control program storage module
- 810: Control program editor module
- 812: Controller interface module
- 901: CPU
- 902: ROM
- 903: RAM
- 904: HDD
- 905: Keyboard
- 906: Mouse
- 907: Monitor
- 908: CD-ROM Drive
- 909: Communication interface
- 910: Internal bus

## Claims

1. A simulation device (6) that includes a control module (806) for executing a simulation of a control program (10, 15) run in a controller (14) that controls the operation of a machine (16), the simulation device (6) comprising:
the control module (806) including:
a first computing module that computes a command value for operating a virtual machine in a virtual space corresponding to the machine (16) in accordance with the control program (10, 15);
a second computing module that computes the behavior of the virtual machine in accordance with the command value computed by the first computing module; and
a detector that determines whether or not the state of the virtual machine satisfies a simulated detection condition corresponding to a detection condition for a sensor (610, 611A, 611B, 611C, 621A, 633, 634, 651A, 651B, 663) in the machine (16) on the basis of the behavior of the virtual machine computed by the second computing module; wherein
the first computing module computes the command value in accordance with the simulated detection condition determined by the detector to be satisfied; wherein
the control module (806) is configured for simulating the operations of the controller (14) running the control program (10, 15), the control module (806) being further configured for simulating conditions resulting from the arrival of external signals that affect the operation of the control program (10, 15), or the conditions resulting from changes in the internal state of the controller (14).

2. The simulation device according to claim 1 wherein the first computing module, the second computing module, and the detector may determine the command value, the virtual machine operation, and whether or not the simulated detection condition satisfy a certain condition, respectively, in accordance with the same time axis.

3. The simulation device according to claim 1 wherein the control module (806) further includes:
a command receiver that receives a command to suspend a simulation; and
an operation controller that suspends the simulation when the command receiver accepts the command to suspend the simulation.

4. The simulation device according to claim 3 wherein the control module (806) further includes:
a display controller that displays information indicating the state of the virtual machine when the command receiver accepts the command to suspend the simulation.

5. A simulation method carried out on a simulation device (6) that includes a control module (806) for executing a simulation of a control program (10, 15) run in a controller (14) that controls the operation of a machine (16), the simulation method comprising steps of
the control module (806) includes:
a first step of computing a command value for operating a virtual machine in a virtual space corresponding to the machine (16);
a second step of computing the behavior of the virtual machine in accordance with the command value computed in the first step; and
a detection step of determining whether or not the state of the virtual machine satisfies a simulated detection condition corresponding to a detection condition for a sensor (610, 611A, 611B, 611C, 621A, 633, 634, 651A, 651B, 663) in the machine (16) on the basis of the behavior of the virtual machine computed in the second step; wherein
the first step includes a step of computing the command value in accordance with the simulated detection condition determined to be satisfied in the detection step; wherein
the control module (806) simulates the operations of the controller (14) running the control program (10, 15), the control module (806) further simulating conditions resulting from the arrival of external signals that affect the operation of the control program (10, 15), or the conditions resulting from changes in the internal state of the controller (14).

6. A simulation program executed on a simulation device (6) that includes a control module (806) for executing a simulation of a control program (10, 15) run in a controller (14) that controls the operation of the machine (16), the simulation program causing the control module to execute the steps of claim 5.

## Patentansprüche

1. Simulationsvorrichtung (6) mit einem Kontrollmodul (806) für ein Ausführen einer Simulation von einem Kontrollprogramm (10, 15), welches in einem Kontroller (14) ausgeführt wird, der den Betrieb einer Maschine (16) regelt, wobei die Simulationsvorrichtung (6) umfasst:
das Kontrollmodul (806) mit:
einem ersten Rechenmodul, welches einen Befehlswert für ein Betreiben einer virtuellen Maschine in einem virtuellen Raum entsprechend der Maschine (16) gemäß dem Kontrollprogramm (10, 15) berechnet;
einem zweiten Rechenmodul, welches das Verhalten der virtuellen Maschine gemäß dem von dem ersten Rechenmodul berechneten Befehlswert berechnet; und
einem Detektor, welcher auf Basis des von dem zweiten Rechenmodul berechneten Verhaltens der virtuellen Maschine ermittelt, ob der Zustand der virtuellen Maschine eine simulierte Detektionsbedingung erfüllt oder nicht, die einer Detektionsbedingung für einen Sensor (610, 611A, 611B, 611C, 621A, 633, 634, 651A, 651B, 663) in der Maschine (16) entspricht; wobei
das erste Rechenmodul den Befehlswert gemäß der simulierten Detektionsbedingung berechnet, deren Erfüllung von dem Detektor ermittelt wird; wobei
das Kontrollmodul (806) dazu eingerichtet ist, den Betrieb des Kontrollers (14), der das Kontrollprogramm (10, 15) ausführt, zu simulieren, wobei das Kontrollmodul (806) weiterhin dazu eingerichtet ist, Bedingungen, welche aus dem Zugang externer Signale resultieren, die den Betrieb des Kontrollprogramms (10, 15) beeinflussen, oder die Bedingungen, die aus den Änderungen des internen Zustands des Kontrollers (14) resultieren, zu simulieren.

2. Simulationsvorrichtung nach Anspruch 1, wobei das erste Rechenmodul, das zweite Rechenmodul und der Detektor den Befehlswert, den Betrieb der virtuellen Maschine und ob die simulierte Detektionsbedingung eine bestimmte Bedingung erfüllt oder nicht, jeweils entsprechend der gleichen Zeitachse, bestimmen können.

3. Simulationsvorrichtung nach Anspruch 1, wobei das Kontrollmodul (806) ferner umfasst:
einen Befehlsempfänger, der einen Befehl empfängt, um eine Simulation zu unterbrechen; und
eine Betriebskontroller, der die Simulation unterbricht, wenn der Befehlsempfänger den Befehl, die Simulation zu unterbrechen, akzeptiert.

4. Simulationsvorrichtung nach Anspruch 3, wobei das Kontrollmodul (806) ferner umfasst:
einen Anzeigekontroller, der Informationen anzeigt, die den Zustand der virtuellen Maschine angeben, wenn der Befehlsempfänger den Befehl, die Simulation zu unterbrechen, akzeptiert.

5. Simulationsverfahren, welches auf einer Simulationsvorrichtung (6) ausgeführt wird, die ein Kontrollmodul (806) für ein Ausführen einer Simulation eines Kontrollprogramms (10, 15) umfasst, welches in einem Kontroller (14) ausgeführt wird, der den Betrieb einer Maschine (16) regelt, wobei das Simulationsverfahren folgende Schritte umfasst:
das Kontrollmodul (806) mit:
einem ersten Schritt eines Berechnens eines Befehlswerts für ein Betreiben einer virtuellen Maschine in einem virtuellen Raum entsprechend der Maschine (16);
einem zweiten Schritt eines Berechnens des Verhaltens der virtuellen Maschine gemäß dem in dem ersten Schritt berechneten Befehlswert; und
einem Detektionsschritt eines Ermittelns auf Basis des in dem zweiten Schritt berechneten Verhaltens der virtuellen Maschine, ob der Zustand der virtuellen Maschine eine simulierte Detektionsbedingung erfüllt oder nicht, die einer Detektionsbedingung für einen Sensor (610, 611A, 611B, 611C, 621A, 633, 634, 651A, 651B, 663) in der Maschine (16) entspricht; wobei
der erste Schritt einen Schritt eines Berechnens des Befehlswerts gemäß der simulierten Detektionsbedingung umfasst, deren Erfüllung in dem Detektionsschritt ermittelt wird; wobei
das Kontrollmodul (806) den Betrieb des Kontrollers (14), der das Kontrollprogramm (10, 15) ausführt, simuliert, wobei das Kontrollmodul (806) weiterhin Bedingungen, welche aus dem Zugang externer Signale resultieren, die den Betrieb des Kontrollprogramms (10, 15) beeinflussen, oder die Bedingungen, die aus den Änderungen des internen Zustands des Kontrollers (14) resultieren, simuliert.

6. Simulationsprogramm, welches auf einer Simulationsvorrichtung (6) ausgeführt wird, welche ein Kontrollmodul (806) für ein Ausführen einer Simulation eines Kontrollprogramms (10, 15) umfasst, das in einem den Betrieb der Maschine (16) steuernden Kontroller (14) ausgeführt wird, wobei das Simulationsprogramm veranlasst, dass das Kontrollmodul die Schritte des Anspruchs 5 ausführt.

## Revendications

1. Dispositif de simulation (6) comportant un module de commande (806) destiné à exécuter une simulation de programme de commande (10, 15) exécuté dans un dispositif de commande (14) qui régit le fonctionnement d'une machine (16), le dispositif de simulation (6) comprenant :
le module de commande (806) comportant :
un premier module de calcul qui calcule une valeur d'instruction destinée à faire fonctionner une machine virtuelle dans un espace virtuel correspondant à la machine (16), en conformité avec le programme de commande (10, 15) ;
un second module de calcul qui calcule le comportement de la machine virtuelle en conformité avec la valeur d'instruction calculée par le premier module de calcul ; et
un détecteur qui détermine si l'état de la machine virtuelle satisfait ou non à une condition de détection simulée correspondant à une condition de détection de capteur (610, 611A, 611B, 611C, 621A, 633, 634, 651A, 651B, 663) de la machine (16), sur la base du comportement de la machine virtuelle, calculé par le second module de calcul ; dans lequel :
le premier module de calcul calcule la valeur d'instruction en conformité avec la condition de détection simulée déterminée par le détecteur comme étant satisfaite ; dans lequel :
le module de commande (806) est conçu pour simuler les opérations du dispositif de commande (14) exécutant le programme de commande (10, 15), le module de commande (806) étant conçu en outre pour simuler des conditions résultant de l'arrivée de signaux externes qui affectent le déroulement du programme de commande (10, 15), ou les conditions résultant de modifications de l'état interne du dispositif de commande (14).

2. Dispositif de simulation selon la revendication 1, dans lequel le premier module de calcul, le second module de calcul, et le détecteur peuvent déterminer la valeur d'instruction, le fonctionnement de la machine virtuelle et si la condition de détection simulée satisfait ou non à une certaine condition, respectivement, conformément au même axe des temps.

3. Dispositif de simulation selon la revendication 1, dans lequel le module de commande (806) comporte en outre :
un récepteur d'instructions qui reçoit une instruction de suspension d'une simulation ; et
un dispositif de commande de fonctionnement qui suspend la simulation lorsque le récepteur d'instructions accepte l'instruction de suspension de la simulation.

4. Dispositif de simulation selon la revendication 3, dans lequel le module de commande (806) comporte en outre :
un dispositif de commande d'affichage qui affiche des informations indiquant l'état de la machine virtuelle, lorsque le récepteur d'instructions accepte l'instruction de suspension de la simulation.

5. Procédé de simulation mis en oeuvre dans un dispositif de simulation (6) qui comporte un module de commande (806) destiné à exécuter une simulation de programme de commande (10, 15) exécuté dans un dispositif de commande (14) qui régit le fonctionnement d'une machine (16), le procédé de simulation comprenant les étapes suivantes :
le module de commande (806) comporte :
une première étape consistant à calculer une valeur d'instruction destinée à faire fonctionner une machine virtuelle dans un espace virtuel correspondant à la machine (16) ;
une seconde étape consistant à calculer le comportement de la machine virtuelle en conformité avec la valeur d'instruction calculée à la première étape ; et
une étape de détection consistant à déterminer si l'état de la machine virtuelle satisfait ou non à une condition de détection simulée correspondant à une condition de détection d'un capteur (610, 611A, 611B, 611C, 621A, 633, 634, 651A, 651B, 663) de la machine (16), sur la base du comportement de la machine virtuelle calculé à la seconde étape ; dans lequel :
la première étape comporte une étape consistant à calculer la valeur d'instruction en conformité avec la condition de détection simulée déterminée comme étant satisfaite à l'étape de détection ; dans lequel :
le module de commande (806) simule les opérations du dispositif de commande (14) exécutant le programme de commande (10, 15), le module de commande (806) simulant en outre des conditions résultant de l'arrivée de signaux externes qui affectent le déroulement du programme de commande (10, 15), ou les conditions résultant de modifications de l'état interne du dispositif de commande (14).

6. Programme de simulation exécuté dans un dispositif de simulation (6) qui comporte un module de commande (806) destiné à exécuter une simulation de programme de commande (10, 15) exécuté dans un dispositif de commande (14) qui régit le fonctionnement de la machine (16), le programme de simulation faisant exécuter au module de commande les étapes de la revendication 5.
